(19) Europäisches Patentamt

European Patent Office

Office européen des brevets

(11) **EP 4 035 537 A1**

(12) # EUROPEAN PATENT APPLICATION
published in accordance with Art. 153(4) EPC

(43) Date of publication:
**03.08.2022 Bulletin 2022/31**

(21) Application number: **20868286.4**

(22) Date of filing: **24.09.2020**

(51) International Patent Classification (IPC):
*A23K 20/142* (2016.01)    *A23K 20/158* (2016.01)
*A23K 20/174* (2016.01)    *A23K 20/24* (2016.01)
*A23K 20/26* (2016.01)    *A23K 20/28* (2016.01)
*A23K 40/00* (2016.01)    *A23K 40/35* (2016.01)
*A23K 50/10* (2016.01)

(52) Cooperative Patent Classification (CPC):
A23K 20/142; A23K 20/158; A23K 20/174;
A23K 20/24; A23K 20/26; A23K 20/28;
A23K 40/00; A23K 40/35; A23K 50/10

(86) International application number:
**PCT/JP2020/036071**

(87) International publication number:
**WO 2021/060388 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2019 JP 2019176242**

(71) Applicant: **AJINOMOTO CO., INC.**
**Chuo-ku**
**Tokyo 104-8315 (JP)**

(72) Inventors:
• **TANAKA, Masayuki**
**Kawasaki-shi, Kanagawa 210-8681 (JP)**
• **SHIBAHARA, Susumu**
**Kawasaki-shi, Kanagawa 210-8681 (JP)**

(74) Representative: **Strehl Schübel-Hopf & Partner**
**Maximilianstrasse 54**
**80538 München (DE)**

(54) **ADDITIVE COMPOSITION FOR RUMINANT FEEDS**

(57) The object of the present invention is to provide a feed additive composition for ruminants which contains a choline salt, shows high protection in the rumen, and is also superior in dissolution in the lower gastrointestinal tract, and the like. The present invention relates to a feed additive composition for ruminants containing
(A) at least one selected from hydrogenated oil and wax, each having a melting point of higher than 50°C and lower than 90°C,
(B) 0.01 - 6 wt% of a surfactant,
(C) 10 - 60 wt% of a choline salt,
(D) 1 - 40 wt% of L-lysine or a salt thereof,
(E) a hygroscopic agent, and
(F) 0.1 - 3 wt% of a stearic acid metal salt, and the like.

EP 4 035 537 A1

**Description**

[Technical Field]

The present invention relates to a feed additive composition for ruminants. More particularly, the present invention relates to a feed additive composition for ruminants that contains a choline salt, is provided with high protection in the rumen, and is superior in dissolution in the lower gastrointestinal tract.

[Background Art]

When ruminants ingest feed, the microorganisms living in the first stomach (rumen) decompose a part of the nutrients in the feed as a nutrient source. Due to this function, ruminants can absorb, as nutrients, substances that cannot be digested directly. For example, microorganism decomposes cellulose to produce saccharides and produces volatile organic compounds by fermentation with the saccharides. Ruminants absorb such product as nutrition. On the other hand, a nutrient source desired to be directly absorbed by the ruminant is also decomposed by the microorganism and the ruminant can absorb only the substance produced by the microorganism by fermentation.
To improve the health condition of ruminant and improve producibility of the products thereof (e.g., cow's milk, edible meat, etc.), it is sometimes desirable to add a nutrient that complements general feeds.
In such cases, to ensure that the biologically active substance (nutrient) is not decomposed by microorganism but effectively absorbed, a feed additive preparation for ruminants that protects the nutrient in the rumen and makes the nutrient absorbed in the intestinal tract after the fourth stomach is used.
For example, the present applicant previously proposed, as a production method of a feed additive composition for ruminants showing high protection in rumen (resistance to rumen juice) and superior dissolution in the lower gastrointestinal tract (e.g., small intestine, etc.) after the fourth stomach, a method including melt-mixing materials (protecting agents such as hydrogenated vegetable oil and hydrogenated animal oil, biologically active substance, etc.) using an extruder (extruding granulator) and solidifying the obtained molten mixture in water, and the like (Patent Literatures 1, 2).
Choline is known to have the effect of improving lipid metabolism in ruminants and the effect of preventing fatty liver. On the other hand, choline chloride, which is available at the lowest cost among choline salts, has high hygroscopicity.
It is also known that substances with high solubility are difficult to pass through rumens (Non Patent Literature 1).

[Citation List]

[Patent Literature]

[PTL 1]
WO 2008/041371
[PTL 2]
WO 2009/122750

[Non Patent Literature]

[NPL 1]
Animal Science Journal(2006)77,495-502

[Summary of Invention]

[Technical Problem]

The problem of the present invention is to provide a feed additive composition for ruminants which contains a choline salt such as choline chloride, shows high protection in the rumen, and is also superior in dissolution in the lower gastrointestinal tract.

[Solution to Problem]

While considering a feed additive composition for ruminants containing a choline salt (choline chloride, etc.), the present inventors found a new technical problem that when choline salt is melt-mixed with other materials using an extruder, a solid matter adheres to the discharge port and screw of the extruder and causes blockage of the discharge port and overload on the screw, making it difficult to produce a molten mixture.

The present inventors have conducted intensive studies and surprisingly found that blockage of the discharge port and overload on the screw can be resolved and a molten mixture can be produced stably by a combined use of a choline salt with a combination of L-lysine or a salt thereof, a hygroscopic agent, and a stearic acid metal salt. They have conducted further studies based on such finding and completed the present invention.

Accordingly, the present invention provides the following.

[1] A feed additive composition for ruminants comprising

(A) at least one selected from hydrogenated oil and wax, each having a melting point of higher than 50°C and lower than 90°C,
(B) 0.01 - 6 wt% of a surfactant,
(C) 10 - 60 wt% of a choline salt,
(D) 1 - 40 wt% of L-lysine or a salt thereof,
(E) a hygroscopic agent, and
(F) 0.1 - 3 wt% of a stearic acid metal salt.

[2] The composition of [1], wherein the aforementioned stearic acid metal salt is at least one selected from the group consisting of calcium stearate and magnesium stearate.
[3] The composition of [1] or [2], wherein the aforementioned L-lysine or a salt thereof is at least one selected from the group consisting of L-lysine, L-lysine hydrochloride, L-lysine sulfate, a salt of L-lysine with carboxylic acid, and hydrates thereof.
[4] The composition of any one of [1] to [3], wherein the aforementioned L-lysine or a salt thereof is L-lysine hydrochloride.
[5] The composition of any one of [1] to [4], further comprising (G) an inorganic powder.
[6] The composition of any one of [1] to [5], wherein the aforementioned surfactant is an emulsifier.
[7] The composition of [6], wherein the aforementioned emulsifier is lecithin.
[8] The composition of any one of [1] to [7], wherein the aforementioned hygroscopic agent is silica.
[9] The composition of any one of [1] to [8], further comprising not less than 0.1 wt% and less than 5 wt% of water.
[10] A method for producing a feed additive composition for ruminants, comprising solidifying, in water, a molten mixture comprising (A) at least one selected from hydrogenated oil and wax, each having a melting point of higher than 50°C and lower than 90°C, (B) 0.01 - 6 wt% of a surfactant, (C) 10 - 60 wt% of a choline salt, (D) 1 - 40 wt% of L-lysine or a salt thereof, (E) a hygroscopic agent, and (F) 0.1 - 3 wt% of a stearic acid metal salt.
[11] A method for producing a feed additive composition for ruminants, comprising solidifying, in water, a molten mixture comprising (A) at least one selected from hydrogenated oil and wax, each having a melting point of higher than 50°C and lower than 90°C, (B) 1.1 - 1.4 wt% of lecithin, (C) 18 - 25 wt% of a choline salt, (D) 15 - 33 wt% of L-lysine hydrochloride, (E) a hygroscopic agent, and (F) 0.7 - 1.5 wt% of a stearic acid metal salt.
[12] The production method of [10] or [11], wherein the aforementioned stearic acid metal salt is at least one selected from the group consisting of calcium stearate and magnesium stearate.
[13] The production method of any one of [10] to [12], wherein the aforementioned L-lysine or a salt thereof is at least one selected from the group consisting of L-lysine, L-lysine hydrochloride, L-lysine sulfate, a salt of L-lysine with carboxylic acid, and hydrates thereof.
[14] The production method of any one of [10] to [13], wherein the aforementioned L-lysine or a salt thereof is L-lysine hydrochloride.
[15] The production method of any one of [10] to [14], wherein the aforementioned molten mixture further comprises (G) an inorganic powder.
[16] The production method of any one of [10] and [12] to [15], wherein the aforementioned surfactant is an emulsifier.
[17] The production method of [16], wherein the aforementioned emulsifier is lecithin.
[18] The production method of any one of [10] to [17], wherein the aforementioned hygroscopic agent is silica.

[Advantageous Effects of Invention]

According to the present invention, a feed additive composition for ruminants that contains a choline salt, is provided with high protection in the rumen, and that is superior in dissolution in the lower gastrointestinal tract can be provided.

According to the feed additive composition for ruminants of the present invention, a choline salt can be efficiently transported to the lower gastrointestinal tract of ruminants. Therefore, ruminants can sufficiently absorb the choline salt as nutrient, which in turn makes it possible to, for example, improve lipid metabolism, effectively prevent fatty liver, and the like in the ruminants.

In the following, protection of the feed additive composition for ruminants in rumen is simply referred to as "protection", and dissolution of the feed additive composition for ruminants in the lower gastrointestinal tract is at times simply referred to as "dissolution".

[Brief Description of Drawings]

[Fig. 1]

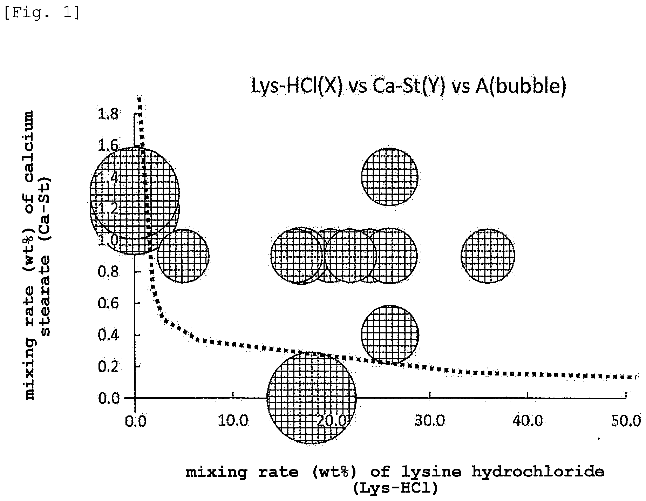

Fig. 1 is a graph (bubble chart) plotting each of the molten mixtures of Examples 1-1 to 1-13 and Comparative Examples 1-1 to 1-3 with the X axis (horizontal axis) showing the mixing ratio of lysine hydrochloride, and the Y axis (vertical axis) showing the mixing ratio of calcium stearate. The size of the plotted circle (bubble) shows the motor current value (A) of the twin screw extruder 5 min after feeding the materials.
[Fig. 2]

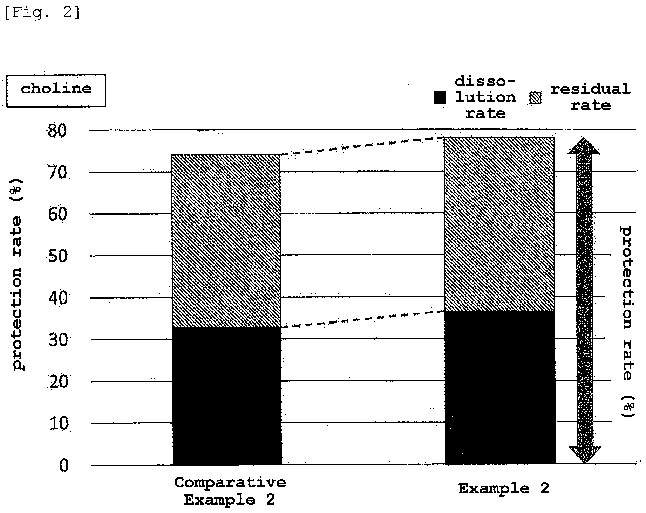

Fig. 2 is a graph showing the measurement results of the protection rate, dissolution rate, and residual rate of choline chloride in the feed additive compositions for ruminants obtained by solidifying the molten mixtures of Example 2 and Comparative Example 2 in water.
[Fig. 3]

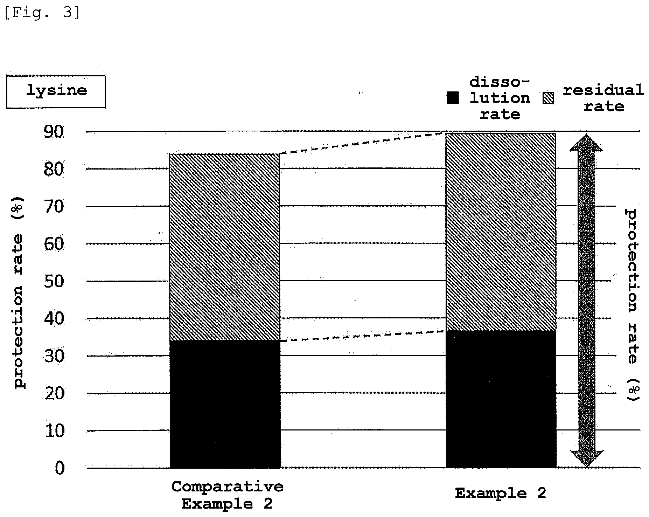

Fig. 3 is a graph showing the measurement results of the protection rate, dissolution rate, and residual rate of lysine hydrochloride in the feed additive compositions for ruminants obtained by solidifying the molten mixtures of Example 2 and Comparative Example 2 in water.

[Description of Embodiments]

One of the characteristics of the feed additive composition for ruminants of the present invention (hereinafter also to be referred to as "the composition of the present invention") is that it contains (A) at least one selected from hydrogenated oil and wax, each having a melting point of higher than 50°C and lower than 90°C (hereinafter referred to as "component A"), (B) surfactant (hereinafter referred to as "component B"), (C) a choline salt (hereinafter referred to as "component C"), (D) L-lysine or a salt thereof (hereinafter referred to as "component D"), (E) a hygroscopic agent (hereinafter referred to as "component E"), and (F) a stearic acid metal salt (hereinafter referred to as "component F").
The composition of the present invention preferably further contains (G) an inorganic powder in addition to components A - F.
The composition of the present invention may further contain water in addition to components A - F or components A - G.
In the present invention, the "feed additive composition for ruminants" refers to a composition generally added to a feed for ruminants and ingested when the ruminants ingest the feed. However, it may not necessarily be added to a feed as long as it is ingested by ruminants and, for example, the composition of the present invention may be singly ingested by ruminants.

[Component A]

In the composition of the present invention, component A acts as a protecting agent. Hydrogenated oil used as component A are obtained by solidifying a vegetable oil or animal oil that is liquid at ordinary temperature (25°C) by adding hydrogen, and are a concept also including fully hydrogenated oil. The melting point of the hydrogenated oil and wax used in the present invention is generally higher than 50°C, and, since the protection in the rumen may be superior, preferably not less than 55°C, more preferably not less than 60°C. The melting point is generally lower than 90°C, and, since the dissolution in the lower gastrointestinal tract may be superior, preferably not more than 80°C, more preferably not more than 70°C.
Specific examples of the hydrogenated oil include hydrogenated vegetable oils such as soybean hydrogenated oil, palm hydrogenated oil, rape seed hydrogenated oil, canola hydrogenated oil, olive hydrogenated oil, almond hydrogenated oil, avocado hydrogenated oil, peanut hydrogenated oil, cottonseed hydrogenated oil, corn hydrogenated oil, safflower hydrogenated oil, sunflower hydrogenated oil, safflower hydrogenated oil, rice hydrogenated oil, and fully hydrogenated oils thereof; and hydrogenated animal oils such as beef tallow, lard and the like; and the like, preferably, soybean hydrogenated oil, soybean fully hydrogenated oil, beef tallow, and lard since they are industrially easily available. Specific examples of the wax include candelilla wax, carnauba wax, rice wax, Japan wax, beeswax, whale wax and the like. These hydrogenated oil and wax may be used alone, or two or more kinds thereof may be used in combination.

The content of component A in the composition of the present invention generally exceeds 23 wt% with respect to the composition of the present invention, and is preferably not less than 30 wt%, more preferably not less than 35 wt%, and particularly preferably not less than 40 wt%, since the balance between protection and dissolution in the rumen may be superior. The content is generally less than 60 wt% with respect to the composition of the present invention, and is preferably not more than 55 wt%, more preferably not more than 50 wt%, particularly preferably not more than 45 wt%, since a high concentration of a biologically active substance such as a choline salt can be contained.

[Component B]

The surfactant used as component B is considered to uniformly disperse the biologically active substance in the molten protecting agent without unevenly distributing the substance. The composition of the present invention can construct a dense protection structure because the biologically active substance is uniformly dispersed in the molten protecting agent.

Specific examples of the surfactant include, but are not limited to, an anion surfactant, a cation surfactant, an amphoteric surfactant, and a nonionic surfactant, and a surfactant having an emulsifying effect is desirable. The composition of the present invention is ingested together with a feed for ruminants, and therefore, an emulsifier is one of the preferable surfactants. These surfactants may be used alone, or two or more kinds thereof may be used in combination.

Specific examples of the emulsifier include, but are not limited to, lecithin, saponin, casein sodium, fatty acid monoglyceride (e.g., stearic acid monoglyceride, oleic acid monoglyceride, etc.), sorbitan fatty acid ester, sucrose fatty acid ester and the like. Among these, lecithin is one of the preferable emulsifiers because it is industrially easily available. These emulsifiers may be used alone, or two or more kinds thereof may be used in combination.

Specific examples of lecithin include, but are not limited to, plant-derived lecithins such as soybean lecithin, rape lecithin, rapeseed lecithin, sunflower lecithin, safflower lecithin, cottonseed lecithin, corn lecithin, linseed lecithin, sesame lecithin, rice lecithin, coconut lecithin, palm lecithin and the like; egg-yolk lecithin and the like, preferably plant-derived lecithin, more preferably soybean lecithin, since they are industrially easily available. These lecithins may be, for example, hydrogenated product, enzyme treatment product, enzyme decomposition product, lecithin fractionated product or the like. These lecithins may be used singly, or two or more kinds thereof may be used in combination.

The content of component B in the composition of the present invention is generally not less than 0.01 wt% with respect to the composition of the present invention and, since the protection in the rumen could be superior and dissolution in the lower gastrointestinal tract could be superior, preferably not less than 0.05 wt%, more preferably not less than 0.5 wt%, particularly preferably not less than 1 wt%, further preferably not less than 1.1 wt%. The content is generally not more than 6 wt% with respect to the composition of the present invention and, since the protection in the rumen could be superior, preferably not more than 5 wt%, more preferably not more than 3 wt%, particularly preferably not more than 2 wt%, and further preferably not more than 1.4 wt%.

[Component C]

Specific examples of the choline salt used as component C include salts of choline with inorganic salts such as hydrochloric acid, sulfuric acid, nitric acid, phosphoric acid and the like; salts of choline with organic acids salt such as tartaric acid, acetic acid, citric acid salt and the like; and the like, preferably, a salt of choline with hydrochloric acid (choline chloride). These choline salts may be used alone, or two or more kinds thereof may be used in combination.

The production method of the choline salt used as component C is not particularly limited, and one produced by a method known per se or a method analogous thereto may be used.

The content of component C in the composition of the present invention is generally not less than 10 wt% with respect to the composition of the present invention, and is preferably not less than 15 wt%, more preferably not less than 17 wt%, and particularly preferably not less than 18 wt%, since choline chloride can be efficiently supplied to ruminants. The content is generally not more than 60 wt% with respect to the composition of the present invention, and is preferably not more than 55 wt%, more preferably not more than 50 wt%, particularly preferably not more than 45 wt%, further preferably not more than 35 wt%, still more preferably not more than 25 wt%, since the balance between protection in the rumen and dissolution in the lower gastrointestinal tract may be superior.

Component C product may be used after pulverizing. When component C is pulverized, the particle size thereof is preferably not more than 150 $\mu$m, more preferably not more than 75 $\mu$m.

[Component D]

L-lysine or a salt thereof used as component D is considered to uniformly disperse a biologically active substance (choline salt) without uneven distribution in a melted protecting agent, similar to component B (surfactant). Both components B and D are required for uniform dispersion of the biologically active substance in the melted protecting agent.

Component D may be free L-lysine, or a salt of L-lysine. Examples of the salt of L-lysine include salts with organic bases, salts with inorganic acids, salts with organic acids, hydrates thereof, and the like. Examples of the salt with inorganic base include salts with alkali metals such as sodium, potassium, lithium and the like, salts with alkaline earth metals such as calcium, magnesium and the like, ammonium salt and the like. Examples of the salt with inorganic acid include salts with hydrohalic acid (hydrochloric acid, hydrobromic acid, hydroiodic acid, etc.), sulfuric acid, nitric acid, phosphoric acid or the like. Examples of the salt with organic acid include salts with carboxylic acid (e.g., carboxylic acid having 1 - 3 carbon atoms such as formic acid, acetic acid, propionic acid), oxalic acid, succinic acid, maleic acid, fumaric acid, citric acid or the like. These salts with L-lysine may be used alone, or two or more kinds thereof may be used in combination.

Component D is preferably at least one selected from the group consisting of L-lysine, salt of L-lysine with inorganic acid, salt of L-lysine with organic acid and hydrates thereof, more preferably at least one selected from the group consisting of L-lysine, L-lysine hydrochloride, L-lysine sulfate, a salt of L-lysine with carboxylic acid and hydrates thereof, particularly preferably L-lysine hydrochloride.

L-lysine or a salt thereof used as component D may be any of those extracted and purified from naturally occurring animals and plants, or those obtained by a chemical synthesis method, a fermentation method, an enzyme method or a gene recombination method. Alternatively, a commercially available product may be used as it is or used after pulverization. When component D is pulverized, the particle size thereof is preferably not more than 150 $\mu$m, more preferably not more than 75 $\mu$m.

The content of component D in the composition of the present invention is generally not less than 1 wt% with respect to the composition of the present invention, and is preferably not less than 3 wt%, more preferably not less than 15 wt%, and particularly preferably not less than 20 wt%, since the balance between protection and dissolution in the rumen may be superior and L-lysine or a salt thereof may be efficiently supplied to ruminants. The composition of the present invention contains component D in the above-mentioned amount, which makes it possible to improve uniformity of the molten mixture, improve discharge to the extruder, and decrease overload on the screw. The content is generally not more than 40 wt% with respect to the composition of the present invention, and is preferably not more than 33 wt%, more preferably not more than 30 wt%, from the viewpoint of balance with the content of choline salt and superior protection in the rumen. When a salt of L-lysine is used as component D, the amount of the salt of L-lysine is calculated in terms of free form (L-lysine).

L-lysine or a salt thereof can also be used as a biologically active substance because it shows action to increase the milk production of lactating cows, and the like. Even in such a case, the content of L-lysine or a salt thereof in the composition of the present invention is preferably within the above-mentioned range.

[Component E]

The hygroscopic agent used as component E is not particularly limited as long as it has the property of being able to absorb and adsorb water (hygroscopicity) and can be ingested by ruminants. For example, silica (silicon dioxide), zeolite, kaolin, silicic acid, calcium silicate, magnesium silicate, diatomaceous earth, wheat flour, rice bran, corn cob meal, cornstarch, cellulose, calcium carbonate, sodium carbonate, dextrin, natural sodium silicate, corn powder, wheat bran, pullulan, bentonite, silicic anhydride, anhydrous silicates, chaff, calcium monohydrogen phosphate, tricalcium phosphate, calcium dihydrogen phosphate, and the like can be mentioned. Silica is preferred because it is more widely used as a diluting substance for feed additives. These hygroscopic agents may be used alone, or two or more kinds thereof may be used in combination. Some of these hygroscopic agents are regulated by law for use in feed additive compositions depending on the country, and appropriate hygroscopic agents may be used in accordance with the laws and regulations of each country.

Examples of the silica include wet silica (e.g., precipitated silica, silica gel, colloidal silica etc.), dry silica (e.g., fumed silica etc.), molten silica (e.g., fused silica etc.) and the like, preferably, wet silica.

The production method of the hygroscopic agent used as component E is not particularly limited, and one produced by a method known per se or a method analogous thereto may be used. A commercially available product may be used as the hygroscopic agent, which is convenient and preferred.

The choline salt (component C) may be combined in advance with a hygroscopic agent (component E).

The content of component E in the composition of the present invention is generally not less than 1 wt% with respect to the composition of the present invention, and is preferably not less than 1.5 wt%, more preferably not less than 2 wt%, from the aspect of prevention of moisture absorption. The content is generally not more than 15 wt% with respect to the composition of the present invention, and is preferably not more than 10 wt%, more preferably not more than 5 wt%, further preferably not more than 4 wt%, particularly preferably not more than 3 wt%, since the balance with the biologically active substance is superior.

In the composition of the present invention, the weight ratio of the content of component E and the content of component C is not particularly limited. It is preferably component E:component C=1:1 - 20, more preferably component E:component C=1:3 - 15, particularly preferably component E:component C=1:6 - 12, from the aspect of effective prevention of moisture absorption of the choline salt.

[Component F]

In the present invention, a stearic acid metal salt is used as component F. Stearic acid metal salts are conventionally widely used as lubricants when tableting powder to produce tablets, and the like, and are known to improve the fluidity of powder by coating the powder surface. While the present invention is not bound by any theory, the molten mixture prepared in the process of producing the composition of the present invention is a non-solid substance and the action of a stearic acid metal salt on a non-solid substance is unpredictable from the general lubricating action obtained in powder as a solid substance.

As the stearic acid metal salt used as component F, for example, calcium stearate, magnesium stearate, zinc stearate, lead stearate, lithium stearate, strontium stearate, cadmium stearate, barium stearate, and the like can be mentioned. Component F is preferably at least one selected from the group consisting of calcium stearate, magnesium stearate, zinc stearate, and lead stearate, more preferably at least one selected from the group consisting of calcium stearate and magnesium stearate, since they are more widely used as a diluting substance for feed additives and are easily available.

The production method of the stearic acid metal salt used as component F is not particularly limited, and one produced by a method known per se or a method analogous thereto may be used.

The content of component F in the composition of the present invention is generally not less than 0.1 wt% with respect to the composition of the present invention, and is preferably not less than 0.3 wt%, more preferably not less than 0.7 wt%, from the aspect of the improvement of the flowability of the molten mixture. The content is generally not more than 3 wt% with respect to the composition of the present invention, and is preferably not more than 2 wt%, more preferably not more than 1.5 wt%, since the balance between protection and dissolution in the rumen may be superior.

[Component G]

The inorganic powder used as component G is chemically non-active, and is not particularly limited as long as it is a substance ingested by ruminants. For example, clay minerals such as talc, mica, and the like; metal oxides such as titanium oxide, zirconium oxide, zinc oxide, and the like; and the like can be mentioned. Talc is preferred since it is more widely used as a diluting substance for feed additives and is easily available. These inorganic powders may be used alone, or two or more kinds thereof may be used in combination.

When the composition of the present invention contains component G, the content of component G in the composition of the present invention is generally not less than 1 wt% with respect to the composition of the present invention, and is preferably not less than 2 wt%, more preferably not less than 2.5 wt%, from the aspect of the effect of improving the protection in the rumen. The content is generally not more than 10 wt% with respect to the composition of the present invention, and is preferably not more than 8 wt%, more preferably not more than 7 wt%, since the balance between protection and dissolution in the rumen may be superior.

Water contained in the composition of the present invention is considered to affect the preservation stability of the composition of the present invention and improve protection in the rumen. Water contained in the composition of the present invention is not particularly limited as long as it is generally used for producing feed additive compositions and, for example, ultrapure water, pure water, ion exchange water, distilled water, purified water, tap water and the like can be mentioned.

The content of water (water content) in the composition of the present invention is generally not less than 0.1 wt% with respect to the composition of the present invention, and is preferably not less than 1 wt%, more preferably not less than 1.5 wt%, since protection in the rumen may be superior. The water content is generally less than 5 wt% with respect to the composition of the present invention, and is preferably not more than 4 wt%, more preferably not more than 3 wt%, since protection in the rumen may be superior.

The water content in the composition of the present invention is determined by a loss on drying method (110°C, 3 hr).

The composition of the present invention may contain, besides components A -F, optional component G, water, and other component other than those. Such other component is not particularly limited as long as the object of the present invention is not impaired. For example, biologically active substances other than choline salts; excipients such as calcium carbonate and the like; pH adjusters such as sodium hydrogen carbonate, citric acid, and the like; anticaking agents such as calcium silicate, sodium aluminosilicate, and the like; and the like can be mentioned. Such other component may be used singly, or two or more kinds thereof may be used in combination.

The composition of the present invention is preferably formed in a shape easily ingestible for ruminants. While the shape is not particularly limited, for example, spherical, granular, pellet shape, rugby ball shape, pressed barley shape, hen's egg shape, tablet, and the like can be mentioned.

It is preferable that the composition of the present invention has a spherical or a shape similar thereto. While the particle size of a molded product of the composition of the present invention is not particularly limited, it is generally 0.1 - 20 mm and, from the aspect of mixing level with a feed, preferably 0.3 - 10 mm, more preferably 0.5 - 5 mm. The particle size of the composition of the present invention is defined by sieve analysis using the standard sieve defined in JIS Z 8801 of Japanese Industrial Standards.

The production method of the composition of the present invention is not particularly limited, and the composition of the present invention may be produced by a method known per se. For example, it can be produced by the method described in WO2008/041371, US-A-2009/0232933, WO2009/122750, US-A-2011/0081444 or a method analogous thereto. Specifically, the composition of the present invention can be produced by a method including solidifying a molten mixture containing components A - F (or components A - G) in water or the like.

The content of each of components A - F in the molten mixture can be appropriately set according to the content of each of components A - F in the composition of the present invention to be produced. The content of component A in the molten mixture is generally more than 23 wt% and less than 60 wt%, preferably 30 - 55 wt%, more preferably 35 - 50 wt%, particularly preferably 40 - 45 wt%, with respect to the molten mixture; the content of component B in the molten mixture is generally 0.01 - 6 wt%, preferably 0.05 - 5 wt%, more preferably 0.5 - 3 wt%, particularly preferably 1 - 2 wt%, further preferably 1.1 - 1.4 wt%, with respect to the molten mixture; the content of component C in the molten mixture is generally 10 - 60 wt%, preferably 15 - 55 wt%, more preferably 17 - 50 wt%, particularly preferably 18 - 45 wt%, further preferably 18 - 35 wt%, still more preferably 18 - 25 wt%, with respect to the molten mixture; the content of component D in the molten mixture is generally 1 - 40 wt%, preferably 3 - 35 wt%, more preferably 15 - 33 wt%, particularly preferably 20 - 30 wt%, with respect to the molten mixture; the content of component E in the molten mixture is generally 1 - 15 wt%, preferably 1.5 - 10 wt%, more preferably 2 - 5 wt%, further preferably, 2 - 4 wt%, particularly preferably 2 - 3 wt%, with respect to the molten mixture; and the content of component F in the molten mixture is generally 0.1 - 3 wt%, preferably 0.3 - 2 wt%, more preferably 0.7 - 1.5 wt%, with respect to the molten mixture.

When the molten mixture contains component G, the content of component G in the molten mixture is generally 1 - 10 wt%, preferably 2 - 8 wt%, more preferably 2.5 - 7 wt%, with respect to the molten mixture.

A preparation method of the molten mixture containing components A - F (or components A - G) is not particularly limited and, for example, a method including heating components A - G (optionally containing other component when desired) using a commercially available extruder (preferably, twin screw extruder) and the like, and the like can be mentioned. The order of addition of components A - F or components A - G to a cylinder of the extruder is not particularly limited. To coat the surface of component C with component B, the components B and C may be mixed with a mixer or the like before addition, or components A - F or components A - G may be added almost simultaneously to increase production efficiency. Alternatively, the molten mixture can also be obtained by mixing components A and C in advance at around room temperature, adding the remaining components and heating the mixture. Component C may be pulverized before use. For example, a mixture obtained by mixing component E with a mixer or the like to prevent moisture absorption, or a premix product of component C and component E, or the like, may be used after pulverizing with a pulverizer to an average particle size (median size) of preferably not more than 150 μm, more preferably not more than 75 μm, and sieving as necessary.

The temperature at which components A - F or components A - G are heated is not particularly limited as long as it is not less than the melting point of component A. It is preferably about 5 to 15°C higher than the melting point of component A. For example, when soybean fully hydrogenated oil (melting point: 67 - 68°C) is used as component A, it is heated at 72 - 85°C. In this case, the component other than component A is not necessarily melted. For example, component C may be dispersed without melting and the molten mixture may be in a slurry state. It is not necessary to heat at a temperature not less than the melting point of component A from the beginning of heating. A stable molten mixture is obtained efficiently by, for example, first preheating materials at a temperature 5 - 10°C lower than the melting point of component A, then conveying the materials by a screw in the cylinder of the extruder, and then heating them at a predetermined temperature not less than the melting point of component A.

The instrument that can be utilized for preparing the molten mixture is not limited to the extruder, and any instrument may be used appropriately as long as it can prepare a molten mixture that can become a droplet when dropped naturally.

The method for solidifying the molten mixture containing components A - F (or components A - G) in water is not particularly limited. Immersing the molten mixture in water, specifically, for example, retaining the molten mixture in a container having a hole (pore) with a predetermined diameter and dropping the molten mixture into water from the hole, and the like may be performed. When the molten mixture is dropped (preferably, free fall) from the hole with a predetermined diameter, it is cleaved by the action of surface tension during dropping to become respectively independent droplets. When the droplet is dropped into a water tank at a given temperature, the droplet is instantaneously cooled in water to solidification and a solid with a given shape is obtained. When the droplet solidifies into solid, the water in the water tank is taken into the solid. This water can be reduced in the subsequent heat-drying treatment (described later).

When the molten mixture is solidified in water, a part of the biologically active substance may be dissolved in water; however, the amount thereof is extremely small.

The diameter of the hole in the container retaining the molten mixture may be appropriately selected according to the size of the obtained granule (solidified droplet of the molten mixture), and the like. It is generally 1 - 5 mm, preferably 0.5 - 3 mm.

While the container retaining the molten mixture is not particularly limited as long as it has a hole with a predetermined diameter, a multi-hole shooter is preferably used since it can efficiently increase the production amount. Here, the "multi-hole shooter" refers to a container having a plurality of perforations in the bottom and a facility for temporarily retaining the molten mixture. The container for retaining the molten mixture is preferably provided with a heat facility to prevent cooling of the molten mixture to be retained.

The temperature of the molten mixture when dropped into water is not particularly limited and is generally 60 - 90°C, and preferably 70 - 90°C in view of the melting point.

The temperature of water into which the molten mixture is dropped is not particularly limited as long as the molten mixture is instantaneously solidified, and is generally 0 - 30°C.

The granule obtained by solidifying a molten mixture containing components A - E in water (to be also referred to as "underwater granule" in the present specification) is preferably subjected to a heat-drying treatment. By the heat-drying treatment, the water content of the granule can be adjusted. The heat-drying treatment can be performed, for example, by exposing the granule generally for several minutes to several tens of minutes to an atmosphere (e.g., hot water, vapor, hot air, etc.) set to a temperature lower than the melting point of component A contained in the granule, or the like. The time of the heat-drying treatment can be appropriately determined based on the temperature of the heat-drying treatment, the kind of component A, the amount of the granule and the like.

When the composition of the present invention is produced by a method including solidifying a molten mixture containing components A - F (or components A - G) in water, the method preferably may further include coating the solidified mixture with a coating agent. Examples of the usable coating agent include hydrogenated oil, surfactant, natural vegetable oil, animal oil, vegetable oil, fatty acid or a salt thereof, wax, wax, polysaccharides (chitosan, alginic acid, etc.), monoglyceride, diglyceride, triglyceride, fatty acid ester, fatty acid alcohol, celluloses (carboxymethyl cellulose, etc.), clay, silica, pH sensitivity polyvinyl derivative (polyvinylpyrrolidone, etc.), acrylic resin (resin No. IV, etc.) and the like. The method for coating the solidified mixture is not particularly limited and a method known per se can be adopted for coating. For example, the methods described in US Patent No. 8,137,719, US Patent No. 8,182,851 and the like or a method analogous thereto can be used for the production.

In one embodiment, the composition of the present invention may be a dispersion type (matrix type) composition. As used herein, the "dispersion type" feed additive composition for ruminants refers to a feed additive composition for ruminants containing each component containing a biologically active substance in a state where the component is dispersed substantially uniformly. In another embodiment, the composition of the present invention may be a coating type composition in which a dispersion type core is coated with a coating agent. As used herein, a feed additive composition for ruminants of the "coating type in which a dispersion type core is coated with a coating agent" refers to a feed additive composition for ruminants in which the center part (core) is a dispersion type (containing each component containing a biologically active substance in a state where the component is substantially uniformly dispersed) and the surface of the core is coated with a coating agent.

The composition of the present invention preferably has a layer substantially free of a biologically active substance (e.g., choline salt, etc.) as the surface layer thereof. The composition of the present invention may have water-repellency by the presence of a layer substantially free of a biologically active substance as the surface layer. As used herein, the "layer substantially free of a biologically active substance" means either a layer completely free of a biologically active substance or a layer containing a biologically active substance in an amount not inhibiting water-repellency (generally not more than 2 wt%, preferably not more than 1 wt%).

The thickness of the layer substantially free of a biologically active substance is generally 10 - 110 $\mu$m and, since water-repellency could be superior, preferably 10 - 80 $\mu$m.

The composition of the present invention having a layer substantially free of a biologically active substance as the surface layer can also be produced by, for example, a method including solidifying a molten mixture containing components A - F (or components A - G) in water, and coating the solidified mixture with a coating agent, or the like.

The protection in rumen and the dissolution in the lower gastrointestinal tract of the composition of the present invention can be evaluated from the protection rate and the dissolution rate of biologically active substances (e.g., choline salt, etc.) that are measured by in vitro tests using a dissolution tester.

<Measurement of concentration (concentration A) of biologically active substance for calculation of protection rate>

Using a dissolution tester (manufactured by TOYAMA SANGYO CO., LTD.), a preparation sample (about 3 g) is placed in ultrapure water (900 ml) (produced using Milli Q (manufactured by Millipore)) heated to a temperature (e.g.,

39°C) corresponding to the body temperature of ruminants (e.g., dairy cattle etc.), and the mixture is stirred at 100 rpm. At 20 hr from the start of stirring, 2 ml of the stirring test solution is collected for protection rate measurement, and the concentration of the biologically active substance is measured (concentration A, unit: mg/dl).

<Measurement of concentration (concentration B) of biologically active substance for calculation of dissolution rate>

To the test solution immediately after collection of the above-mentioned sample for protection rate measurement is added with stirring at 100 rpm an aqueous solution (8 ml) of a bile powder (manufactured by FUJIFILM Wako Pure Chemical Corporation) and pancreatin (manufactured by FUJIFILM Wako Pure Chemical Corporation) (concentration of bile powder and pancreatin is 23.4 g/100 ml for each) to give a small intestine-corresponding test solution. At 5 hr from the addition of the aqueous solution, 2 ml of the stirring test solution is collected for dissolution rate measurement, and the concentration of the biologically active substance is measured (concentration B, unit: mg/dl).
The concentration of the above-mentioned biologically active substance (concentrations A and B) is measured using liquid chromatography (manufactured by Waters) or a biosensor (manufactured by Oji Scientific Instruments).

<Calculation of protection rate and dissolution rate of biologically active substance>

The protection rate and dissolution rate of biologically active substance are calculated by the following formulas.

```
protection rate [%]={1-(concentration A[mg/dl]×9)/(preparation
sample weight [g]×1000×content of biologically active substance
in preparation sample [wt%]/100)}×100
```

```
dissolution rate [%]={((concentration B[mg/dl]-concentration
A[mg/dl])×9)/(preparation sample weight [g]×1000×content of
biologically active substance in preparation sample
[wt%]/100)}×100
```

The protection rate of the biologically active substance in the composition of the present invention is preferably not less than 50%, more preferably not less than 70%, particularly preferably not less than 80%. On the other hand, the upper limit of the protection rate of the composition of the present invention is not particularly limited and is generally 100%.
Higher dissolution rates of the biologically active substance in the composition of the present invention are more preferred, and the upper limit thereof is not particularly limited.
The ruminants for which the composition of the present invention is used are not particularly limited. For example, bovine, sheep, goat, deer, giraffe, camel and llama and the like can be mentioned. Preferred is bovine.
The amount of the composition of the present invention to be added to a feed for ruminants is not particularly limited, and can be appropriately adjusted according to the necessary amount of the biologically active substance (e.g., choline chloride etc.) and the like. The composition of the present invention is generally added to a feed and used together with the feed to be ingested by the ruminants. However, as long as the composition is ingested by the ruminants, it may not necessarily be added to a feed. For example, the composition of the present invention can be singly ingested by the ruminants.
The present invention is explained more specifically in the following Examples, but the present invention is not limited at all by these Examples.

[Example]

<Experimental Example 1>

[Production of molten mixtures of Examples 1-1 to 1-4, 1-10, 1-11, 1-13]

A mixture obtained by mixing choline chloride (manufactured by Hangzhou Donglou Bio-Nutrient) and silica (manufactured by Evonik "Carplex #80") by a Nauta mixer (manufactured by HOSOKAWA MICRON CORPORATION), or a premix product of choline chloride and silica (silica ratio: 10 wt%, manufactured by Hangzhou Donglou Bio-Nutrient) was pulverized by a fine grinder (manufactured by HOSOKAWA MICRON CORPORATION). To the obtained ground product were added soybean fully hydrogenated oil (manufactured by Yokozeki Oil & Fat Industries Co., Ltd.), soybean lecithin (manufactured by ADM), lysine hydrochloride pulverized as necessary by a fine grinder (manufactured by Bepex), calcium stearate (manufactured by NOF CORPORATION), and talc (manufactured by ASADA MILLING CO., LTD.) at the ratios (unit: wt%) shown in Tables 1 and 2, and sufficiently mixed. The resulting mixture was continuously charged into a twin screw extruder (manufactured by The Japan Steel Works, Ltd.). The temperature inside the cylinder of the extruder was set to preheating temperature: 65°C, main heating temperature: 88°C, set temperature for outlet: 77°C, and melt-mixing was performed to obtain a molten mixture in a molten slurry state.

[Production of molten mixtures of Examples 1-5 to 1-9, 1-12]

Molten mixtures in a molten slurry state were obtained by the same procedure as in the molten mixtures of Example 1-1 and the like except that talc was not used.

[Production of molten mixture of Comparative Example 1-1]

A molten mixture in a molten slurry state was obtained by the same procedure as in the molten mixtures of Example 1-1 and the like except that calcium stearate and talc were not used.

[Production of molten mixtures of Comparative Examples 1-2 and 1-3]

Molten mixtures in a molten slurry state were obtained by the same procedure as in the molten mixtures of Example 1-1 and the like except that lysine hydrochloride and talc were not used.

[Production of molten mixture of Comparative Example 1-4]

Preparation of a molten mixture was tried by the same procedure as in the molten mixtures of Example 1-1 and the like except that choline chloride (manufactured by Hangzhou Donglou Bio-Nutrient) alone was used (that is, silica was not used) instead of the mixture obtained by mixing choline chloride and silica by a Nauta mixer. However, a molten mixture could not be produced since choline chloride absorbs moisture and could not be pulverized finely.

[Evaluation of molten mixtures of Examples 1-1 to 1-13 and Comparative Examples 1-1 to 1-3]

(1) Discharge status of molten mixture

After 5 min from charging the materials into the twin screw extruder, the discharge status of the molten mixture from the extruder outlet was visually observed, and evaluated based on the following criteria.

[Evaluation criteria]

○: The molten mixture continues to be discharged from the extruder outlet.
×: Discharge of the molten mixture from the extruder outlet ceased.

(2) Motor current value of twin screw extruder

After 5 min from charging the materials into the twin screw extruder, the motor current value (A) of the twin screw extruder was confirmed. The motor current value increases as the load on the screw of the twin screw extruder increases, and a low motor current value indicates a small load on the screw of the twin screw extruder. When the motor current value exceeds 15A, the operation of the twin screw extruder is forcibly stopped.
The results are shown in Tables 1 and 2.

[Table 1]

| component | | Example | | | | | | | |
|---|---|---|---|---|---|---|---|---|---|
| | | 1-1 | 1-2 | 1-3 | 1-4 | 1-5 | 1-6 | 1-7 | 1-8 |
| (A) soybean fully hydrogenated oil | | 46.0 | 43.0 | 41.0 | 38.0 | 42.0 | 42.0 | 42.1 | 42.5 |
| (B) lecithin | | 1.1 | 1.1 | 1.1 | 1.1 | 1.1 | 1.1 | 1.1 | 1.1 |
| (C) chloride choline | | 23.0 | 25.0 | 26.0 | 28.0 | 18.0 | 27.0 | 35.0 | 27.0 |
| (D) lysine hydrochloride | | 20.0 | 22.0 | 24.0 | 26.0 | 36.0 | 26.0 | 17.0 | 26.0 |
| (E) silica | | 2.6 | 2.8 | 2.9 | 3.1 | 2.0 | 3.0 | 3.9 | 3.0 |
| (F) calcium stearate | | 0.9 | 0.9 | 0.9 | 0.9 | 0.9 | 0.9 | 0.9 | 0.4 |
| (G) talc | | 6.4 | 5.2 | 4.1 | 2.9 | | | | |
| total (wt%) | | 100.0 | 100.0 | 100.0 | 100.0 | 100.0 | 100.0 | 100.0 | 100.0 |
| evaluation | discharge status | ○ | ○ | ○ | ○ | ○ | ○ | ○ | ○ |
| | electric current value (A) | 6.1 | 6.1 | 6.1 | 6.1 | 6.3 | 6.6 | 6.9 | 7.2 |

[Table 2]

| component | | Example | | | | | Comparative Example | | |
|---|---|---|---|---|---|---|---|---|---|
| | | 1-9 | 1-10 | 1-11 | 1-12 | 1-13 | 1-1 | 1-2 | 1-3 |
| (A) soybean fully hydrogenated oil | | 41.5 | 43.0 | 43.0 | 45.7 | 41.0 | 39.8 | 52.6 | 49.4 |
| (B) lecithin | | 1.1 | 1.2 | 1.3 | 1.1 | 1.1 | 1.1 | 1.4 | 1.2 |
| (C) chloride choline | | 27.0 | 25.0 | 25.0 | 32.0 | 43.1 | 37.0 | 40.1 | 43.1 |
| (D) lysine hydrochloride | | 26.0 | 22.0 | 22.0 | 16.5 | 5.0 | 18.0 | | |
| (E) silica | | 3.0 | 2.8 | 2.8 | 3.8 | 4.8 | 4.1 | 4.7 | 5.0 |
| (F) calcium stearate | | 1.4 | 0.9 | 0.9 | 0.9 | 0.9 | | 1.2 | 1.3 |
| (G) talc | | | 5.1 | 5.0 | | 4.1 | | | |
| total (wt%) | | 100.0 | 100.0 | 100.0 | 100.0 | 100.0 | 100.0 | 100.0 | 100.0 |
| evaluation | discharge status | ○ | ○ | ○ | ○ | ○ | × | × | × |
| | electric current value (A) | 7.0 | 6.1 | 6.1 | 6.1 | 6.1 | 17.7 | 17.7 | 17.7 |

In Examples 1-1 to 1-13, the molten mixture continued to be discharged from the extruder outlet in a smooth slurry state even after 5 min from feeding the materials. In particular, in Example 1-12, the molten mixture continued to be discharged from the extruder outlet in a smooth slurry state even after continuous operation for 3 hr.

On the other hand, in Comparative Examples 1-1 to 1-3, the molten mixture was discharged from the extruder outlet in a smooth slurry state immediately after feeding the materials, but the extruder outlet was clogged by adhesion of a solid in 5 min after feeding the materials, and the molten mixture was no longer discharged.

When the operation of the twin screw extruder was stopped and the screw was pulled out, adhesion of the solid was not observed in Example 1-12 in which the molten mixture continued to be discharged smoothly. However, in Comparative Examples 1-1 to 1-3 in which the outlet was clogged, adhesion of a large amount of solid was observed on the screw.

In Examples 1-1 to 1-13, the motor current value of the twin screw extruder was significantly lower than the forced shutdown value of 15A even after 5 min from feeding the materials. In Comparative Examples 1-1 to 1-3, the motor current value suddenly increased within 5 min after feeding the materials, finally exceeded the forced shutdown value of 15A, and the operation of the twin screw extruder was forcibly stopped. Thus, continuous production was not possible.

Fig. 1 is a graph (bubble chart) plotting each of Examples 1-1 to 1-13 and Comparative Examples 1-1 to 1-3 with the X axis (horizontal axis) showing the mixing ratio of lysine hydrochloride, and the Y axis (vertical axis) showing the mixing ratio of calcium stearate. The size of the plotted circle (bubble) shows the motor current value (A) of the twin screw extruder.

In the graph, the range with large circles (bubbles) (that is, the range in which the twin screw extruder becomes inoperable) was considered to be the range below the dotted line drawn in the graph.

<Experimental Example 2>

[Production of molten mixture of Example 2]

A mixture obtained by mixing choline chloride (manufactured by Hangzhou Donglou Bio-Nutrient) and silica (manufactured by Evonik "Carplex #80") by a Nauta mixer (manufactured by HOSOKAWA MICRON CORPORATION) was pulverized by a fine grinder (manufactured by HOSOKAWA MICRON CORPORATION). To the obtained ground product were added soybean fully hydrogenated oil (manufactured by Yokozeki Oil & Fat Industries Co., Ltd.), soybean lecithin (manufactured by ADM), lysine hydrochloride pulverized as necessary by a fine grinder (manufactured by Bepex), and calcium stearate (manufactured by NOF CORPORATION) at the ratios (unit: wt%) shown in Table 3, and sufficiently mixed. The resulting mixture was continuously charged into a twin screw extruder (manufactured by The Japan Steel Works, Ltd.). The temperature inside the cylinder of the extruder was set to preheating temperature: 65°C, main heating temperature: 88°C, set temperature for outlet: 77°C, and melt-mixing was performed to obtain a molten mixture in a molten slurry state.

[Production of molten mixture of Comparative Example 2]

A molten mixture in a molten slurry state was obtained by the same procedure as in the molten mixture of Example 2 except that calcium stearate was not used. The motor current value of the twin screw extruder started to increase slightly, and there was a sign that clogging of the extruder outlet might have occurred, but the operation could be continued.

[Table 3]

| component | Example 2 | Comparative Example 2 |
|---|---|---|
| (A) soybean fully hydrogenated oil | 46.4 | 46.3 |
| (B) lecithin | 1.1 | 1.1 |
| (C) chloride choline | 32.0 | 33.0 |
| (D) lysine hydrochloride | 16.0 | 16.0 |
| (E) silica | 3.6 | 3.6 |
| (F) calcium stearate | 0.9 | |
| total (wt%) | 100.0 | 100.0 |

[Production of feed additive composition for ruminants]

The respective molten mixtures obtained in Example 2 and Comparative Example 2 were discharged from the outlet of the extruder, cast into a multi-hole shooter (number of holes: 108, hole diameter: 1 mm), and the molten mixture was freely dropped from the hole of a multi-hole shooter into the water tank for cooling (water temperature: 0 - 10°C). The distance from the multi-hole shooter to the water surface of the water tank for cooling was 10 cm. The molten mixture that dropped from the multi-hole shooter became droplet during dropping, immersed in water, cooled and solidified instantaneously. This was dehydrated and subjected to a heat-drying treatment by a fluidized-bed dryer (manufactured by Freund Corporation) set to 52°C for 10 min to give granules (feed additive composition for ruminants).

The water content, choline chloride content, lysine hydrochloride content, as well as protection rate and dissolution rate of the biologically active substances (choline chloride, lysine hydrochloride) of the feed additive compositions for ruminants of Example 2 and Comparative Example 2 immediately after production were respectively measured and calculated by the following procedures.

[Measurement of water content of feed additive composition]

The water content of each composition was determined by a loss on drying method (110°C, 3 hr).

[Measurement of content of choline chloride and content of lysine hydrochloride in feed addition composition]

The content of choline chloride and the content of lysine hydrochloride in each composition were measured and calculated by the following procedure.

A feed addition composition (1.0 g) was placed in a 50 ml conical tube manufactured by FALCON, concentrated hydrochloric acid (2 mL) and pure water (18 mL) were added, and the mixture was tightly sealed and heated at 90°C for 3 hr. After cooling, the mixture was transferred to a 100 mL volumetric flask, filled up with pure water, and filtered through a 0.45 μm filter to prepare an aqueous solution of choline and lysine. This aqueous solution was diluted 10-fold, quantitatively analyzed using a biosensor BF-7 (manufactured by Oji Scientific Instruments) with a choline electrode for choline and a lysine electrode for lysine, and the choline chloride and lysine hydrochloride contents (wt%) of the feed addition composition were respectively determined.

[Measurement of protection rate and dissolution rate]

<Measurement of concentration (concentration A) of biologically active substance for calculation of protection rate>

Using a dissolution tester (manufactured by TOYAMA SANGYO CO., LTD.), a preparation sample (about 3 g) was placed in ultrapure water (produced using Milli Q (manufactured by Millipore)) (900 ml) heated to 39°C corresponding to the body temperature (e.g., 39°C) of ruminant (e.g., dairy cattle, etc.), and the mixture was stirred at 100 rpm. At 20 hr from the start of stirring, 2 ml of the stirring test solution was collected for protection rate measurement, and the concentration of the biologically active substance was measured (concentration A, unit: mg/dl).

<Measurement of concentration (concentration B) of biologically active substance for calculation of dissolution rate>

To the test solution immediately after collection of the above-mentioned sample for protection rate measurement was added with stirring at 100 rpm an aqueous solution (8 ml) of a bile powder (manufactured by FUJIFILM Wako Pure Chemical Corporation) and pancreatin (manufactured by FUJIFILM Wako Pure Chemical Corporation) (concentration of bile powder and pancreatin is 23.4 g/100 ml for each) to give a small intestine-corresponding test solution. At 5 hr from the addition of the aqueous solution, 2 ml of the stirring test solution was collected for dissolution rate measurement, and the concentration of the biologically active substance was measured (concentration B, unit: mg/dl).

The concentrations (concentrations A and B) of the above-mentioned biologically active substance were measured using liquid chromatography (manufactured by Waters) or a biosensor (manufactured by Oji Scientific Instruments).

<Calculation of protection rate, dissolution rate, and residual rate of biologically active substance>

The protection rate and dissolution rate of biologically active substance were calculated by the following formulas.

```
protection rate (%)={1-(concentration A[mg/dl]×9)/(preparation
sample weight [g]×1000×content of biologically active substance
in preparation sample [wt%]/100)}×100
```

```
dissolution rate (%)={((concentration B[mg/dl]-concentration A
[mg/dl])×9)/(preparation sample weight [g]×1000×content of
biologically active substance in preparation sample
[wt%]/100)}×100
```

In addition, the residual rate of the biologically active substance was calculated by the following formula.

residual rate [%]={1-(concentration B [mg/dl]×9)/(preparation sample weight [g]×1000×content of biologically active substance in preparation sample [wt%]/100)}×100

The protection rate [%] is a total of dissolution rate [%] and residual rate [%].

The measurement results of the water content, choline chloride content, and lysine hydrochloride content of the feed additive compositions for ruminants obtained by solidifying the molten mixtures of Example 2 and Comparative Example 2 in water are shown in Table 4. In addition, the measurement results of the protection rate, dissolution rate, and residual rate of the biologically active substances (choline chloride, lysine hydrochloride) in the compositions are shown in Fig. 2 and Fig. 3.

The contents of soybean fully hydrogenated oil, soybean lecithin, silica, and calcium stearate in the molten mixture do not change before and after granulation in water.

[Table 4]

| component | Example 2 | Comparative Example 2 |
|---|---|---|
| (A) soybean fully hydrogenated oil | 48.2 | 49.3 |
| (B) lecithin | 1.1 | 1.2 |
| (C) chloride choline | 28.6 | 27.0 |
| (D) lysine hydrochloride | 14.9 | 14.6 |
| (E) silica | 3.7 | 3.8 |
| (F) calcium stearate | 0.9 | |
| water | 2.5 | 4.1 |
| total (wt%) | 100.0 | 100.0 |

As is clear from the results shown in Fig. 2 and Fig. 3, the feed additive compositions for ruminants obtained by solidifying, in water, the molten mixture of Example 2 which contains calcium stearate showed higher protection rate and higher dissolution rate as compared with the feed additive compositions for ruminants obtained by solidifying, in water, the molten mixture of Comparative Example 2 which does not contain calcium stearate.

[Industrial Applicability]

According to the present invention, a feed additive composition for ruminants that contains a choline salt, is provided with high protection in the rumen and is superior in dissolution in the lower gastrointestinal tract can be provided.

According to the feed additive composition for ruminants of the present invention, a choline salt can be efficiently transported to the lower gastrointestinal tract of ruminants. Therefore, ruminants can sufficiently absorb the choline salt as nutrient, which in turn makes it possible to, for example, improve lipid metabolism, effectively prevent fatty liver, and the like in the ruminants.

This application is based on a patent application No. 2019-176242 filed in Japan (filing date: September 26, 2019), the contents of which are incorporated in full herein.

**Claims**

1. A feed additive composition for ruminants comprising

(A) at least one selected from hydrogenated oil and wax, each having a melting point of higher than 50°C and lower than 90°C,
(B) 0.01 - 6 wt% of a surfactant,
(C) 10 - 60 wt% of a choline salt,
(D) 1 - 40 wt% of L-lysine or a salt thereof,
(E) a hygroscopic agent, and

(F) 0.1 - 3 wt% of a stearic acid metal salt.

2. The composition according to claim 1, wherein the stearic acid metal salt is at least one selected from the group consisting of calcium stearate and magnesium stearate.

3. The composition according to claim 1 or 2, wherein the L-lysine or a salt thereof is at least one selected from the group consisting of L-lysine, L-lysine hydrochloride, L-lysine sulfate, a salt of L-lysine with carboxylic acid, and hydrates thereof.

4. The composition according to any one of claims 1 to 3, wherein the L-lysine or a salt thereof is L-lysine hydrochloride.

5. The composition according to any one of claims 1 to 4, further comprising (G) an inorganic powder.

6. The composition according to any one of claims 1 to 5, wherein the surfactant is an emulsifier.

7. The composition according to claim 6, wherein the emulsifier is lecithin.

8. The composition according to any one of claims 1 to 7, wherein the hygroscopic agent is silica.

9. The composition according to any one of claims 1 to 8, further comprising not less than 0.1 wt% and less than 5 wt% of water.

10. A method for producing a feed additive composition for ruminants, comprising solidifying, in water, a molten mixture comprising (A) at least one selected from hydrogenated oil and wax, each having a melting point of higher than 50°C and lower than 90°C, (B) 0.01 - 6 wt% of a surfactant, (C) 10 - 60 wt% of a choline salt, (D) 1 - 40 wt% of L-lysine or a salt thereof, (E) a hygroscopic agent, and (F) 0.1 - 3 wt% of a stearic acid metal salt.

11. A method for producing a feed additive composition for ruminants, comprising solidifying, in water, a molten mixture comprising (A) at least one selected from hydrogenated oil and wax, each having a melting point of higher than 50°C and lower than 90°C, (B) 1.1 - 1.4 wt% of lecithin, (C) 18 - 25 wt% of a choline salt, (D) 15 - 33 wt% of L-lysine hydrochloride, (E) a hygroscopic agent, and (F) 0.7 - 1.5 wt% of a stearic acid metal salt.

12. The production method according to claim 10 or 11, wherein the stearic acid metal salt is at least one selected from the group consisting of calcium stearate and magnesium stearate.

13. The production method according to any one of claims 10 to 12, wherein the L-lysine or a salt thereof is at least one selected from the group consisting of L-lysine, L-lysine hydrochloride, L-lysine sulfate, a salt of L-lysine with carboxylic acid, and hydrates thereof.

14. The production method according to any one of claims 10 to 13, wherein the L-lysine or a salt thereof is L-lysine hydrochloride.

15. The production method according to any one of claims 10 to 14, wherein the molten mixture further comprises (G) an inorganic powder.

16. The production method according to any one of claims 10 and 12 to 15, wherein the surfactant is an emulsifier.

17. The production method according to claim 16, wherein the emulsifier is lecithin.

18. The production method according to any one of claims 10 to 17, wherein the hygroscopic agent is silica.

[Fig. 1]

[Fig. 2]

[Fig. 3]

## INTERNATIONAL SEARCH REPORT

International application No.

PCT/JP2020/036071

### A. CLASSIFICATION OF SUBJECT MATTER

A23K 20/142(2016.01)i; A23K 20/158(2016.01)i; A23K 20/174(2016.01)i; A23K 20/24(2016.01)i; A23K 20/26(2016.01)i; A23K 20/28(2016.01)i; A23K 40/00(2016.01)i; A23K 40/35(2016.01)i; A23K 50/10(2016.01)i
FI:     A23K50/10; A23K20/158; A23K20/174; A23K20/142; A23K20/24;
        A23K20/26; A23K20/28; A23K40/00; A23K40/35

According to International Patent Classification (IPC) or to both national classification and IPC

### B. FIELDS SEARCHED

Minimum documentation searched (classification system followed by classification symbols)
A23K20/142; A23K20/158; A23K20/174; A23K20/24; A23K20/26; A23K20/28; A23K40/00; A23K40/35; A23K50/10

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2018/079748 A1 (AJINOMOTO CO., INC.) 03 May 2018 (2018-05-03) entire text all drawings | 1–18 |
| A | JP 2007-518391 A (ASCOR CHIMICI S.R.L.) 12 July 2007 (2007-07-12) entire text all drawings | 1–18 |
| A | JP 2008-514583 A (ASCOR CHIMICI S.R.L.) 08 May 2008 (2008-05-08) entire text all drawings | 1–18 |
| A | US 2006/0045957 A1 (ARCHER-DANIELS-MIDLAND COMPANY) 02 March 2006 (2006-03-02) entire text all drawings | 1–18 |

☐ Further documents are listed in the continuation of Box C.  ☒ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 23 October 2020 (23.10.2020) | 10 November 2020 (10.11.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/036071

| Patent Documents referred in the Report | Publication Date | Patent Family | Publication Date |
|---|---|---|---|
| WO 2018/079748 A1 | 03 May 2018 | US 2019/0246666 A1 entire text all drawings EP 3533339 A1 CA 3041622 A1 AU 2017348742 A1 CN 109843079 A MX 2019004929 A | |
| JP 2007-518391 A | 12 Jul. 2007 | WO 2005/006876 A1 entire text all drawings EP 1646289 A1 CA 2532803 A1 HK 1095247 A1 AU 2003253260 A1 | |
| JP 2008-514583 A | 08 May 2008 | US 2006/0067984 A1 entire text all drawings WO 2006/032958 A2 EP 1791532 A2 CA 2581530 A | |
| US 2006/0045957 A1 | 02 Mar. 2006 | WO 2006/025951 A1 entire text all drawings CA 2576938 A1 KR 10-2007-0058515 A | |

Form PCT/ISA/210 (patent family annex) (January 2015)

21

## REFERENCES CITED IN THE DESCRIPTION

**Patent documents cited in the description**

- WO 2008041371 A
- WO 2009122750 A
- US 20090232933 A
- US 20110081444 A
- US 8137719 B
- US 8182851 B
- JP 2019176242 A

**Non-patent literature cited in the description**

- *Animal Science Journal,* 2006, vol. 77, 495-502